# EUROPEAN PATENT APPLICATION

(11) **EP 4 261 190 A1**
(43) Date of publication of application: **18.10.2023**
(21) Application number: 21903083.0
(22) Date of filing: 09.11.2021
(51) Int. Cl.: C01F 7/36, C09D 1/00, C09D 5/02, C09D 7/63, C09D 183/06, C09D 183/07

(54) **ALUMINA-BASED COMPOSITE SOL COMPOSITION, PRODUCTION METHOD THEREFOR, AND PRODUCTION METHOD FOR ALUMINA-BASED COMPOSITE THIN FILM**

(30) Priority: 09.12.2020 JP 2020203873
(71) Applicant: Namics Corporation, Niigata-shi, Niigata 950-3131 (JP)
(72) Inventor: TSUBURA Hironobu, Niigata-shi, Niigata 950-3131 (JP); NISHIZAKO Yuki, Niigata-shi, Niigata 950-3131 (JP)
(74) Representative: Hoffmann Eitle
(86) International application number: PCT/JP2021/041086
(87) International publication number: WO 2022/123979

(57) **Abstract**

A task of the present invention is to provide a coating composition which is advantageous in that an alumina composite thin film having high insulating properties and high hardness can be produced from the composition by a heat treatment at a relatively low temperature using a sol-gel process. In the present invention, there is provided an alumina composite sol composition comprising (A) an alumina sol containing an alumina hydrate, (B) an alkoxysilane compound, (C) a polyvalent organic acid, and (D) a solvent, wherein the amount of the alumina hydrate in the alumina sol (A) is 3 to 11% by mass.

## Description

### Field of the Invention

The present invention relates to an alumina composite sol composition for forming an alumina composite thin film, a method for producing the same, and a method for producing an alumina composite thin film. The present invention is also concerned with an alumina sol and a method for producing the same.

### Background Art

An alumina sol is produced by a wet process, such as a sol-gel process, and there are various methods for producing the alumina sol. The alumina sol is used in a wide variety of applications, for example, used as a thickener, a suspending agent, a catalyst, a reinforcement for polymer, or a binder, as a surface modifier for metal, inorganic powder, or porous carrier, as a porous self-supporting film, as a film formed on a substrate, or as an adsorbent for water treatment. With respect to the alumina hydrate particles contained in the alumina sol, there are particles in various forms, such as a plate form, a cylinder or prism form, a needle-like form, a particulate form, and a fibrous form, and physical properties of the alumina sol vary depending on the form of the alumina hydrate particles contained, and the use of the alumina sol is changed according to the physical properties.

It has been known that, for imparting insulating properties to a substrate, such as a metal or graphite, an insulating film is formed on the surface of the substrate. Further, it has been known that, for improving the scuff resistance of, for example, the surface of a substrate, such as glass, a plastic sheet, or a plastic lens, or a display device, a transparent film having a hard coating function is formed on the surface of the substrate.

Examples of the method for producing a metal oxide thin film include gas phase processes, such as a PVD process and a CVD process, and liquid phase processes, such as a sol-gel process and an electrophoresis method.

Patent Document 1 discloses a coating composition which is capable of forming by a sol-gel process an alumina thin film that is excellent in, for example, film-forming properties, denseness, gas barrier properties, thermal stability, electrically insulating properties, stain-proofness, and antistatic properties, wherein the coating composition comprises: an alumina sol obtained by hydrolysis of an aluminum alkoxide, the alumina sol containing alumina hydrate particles or alumina particles in a fibrous form or a needle-like form defined by having a short diameter of 1 to 10 nm, a long diameter of 100 to 10,000 nm, and an aspect ratio (long diameter/short diameter) of 30 to 5,000; and an alkoxysilane compound in an amount of 5 to 2,000 parts by mass, relative to 100 parts by mass of the alumina hydrate particles or alumina particles.

### PRIOR ART REFERENCE

### Patent Document

Patent Document 1: Japanese Unexamined Patent Publication No. 2013-216760

### Summary of the Invention

### Problems to be Solved by the Invention

With respect to the film as insulating coating, for obtaining a film having high insulating properties or a film having high hardness for hard coating, it is necessary to achieve a dense structure of the coating film in which the pores are so small that cracks are unlikely to be formed. A conventional alumina sol generally has contained therein particles which are, for example, in a rhombic form, a form of chestnuts in burrs, a strained spherical form, or a cylinder or prism form, and thus the adhesion between the particles is poor. Such a sol is disadvantageous in that the particles are not bonded together densely, making it difficult to completely cover the surface of the substrate.

Meanwhile, the sol-gel process, which is one of the methods for producing a thin film of a metal oxide, can be performed under atmospheric pressure throughout the all steps, and needs only the small number of the steps, and therefore is an inexpensive and simple method, as compared to a gas phase method (such as PVD or CVD) and an electrophoresis method. However, the sol-gel process has a problem in that cracks are likely to be formed in the film due to shrinkage of the metal oxide caused when the solvent in the coating composition volatilizes. In addition, for producing a dense film free of pores by the sol-gel process, the coating composition applied to a substrate must be subjected to heat treatment at a temperature of 500°C or higher, and therefore the material for the substrate to which the composition is applied is restricted.

With respect to the coating composition described in Patent Document 1, when producing an alumina thin film from the composition, the composition applied is subjected to heat treatment at a temperature, for example, in the wide range of from 50 to 1,500°C according to the substrate to which the composition is applied or the purpose, but a heat treatment at a temperature of at least 300°C or higher is required for imparting insulating properties to the film.

Accordingly, an object of the present invention is to provide a coating composition which is advantageous in that an alumina thin film having high insulating properties and high hardness can be produced from the composition by a heat treatment at a relatively low temperature using a sol-gel process.

### Means for Solving the Problems

Specific means for solving the above-mentioned problems are as follows.

The first embodiment of the present invention is the following alumina composite sol composition.

(1) An alumina composite sol composition comprising (A) an alumina sol containing an alumina hydrate, (B) an alkoxysilane compound, (C) a polyvalent organic acid, and (D) a solvent, wherein the amount of the alumina hydrate in the alumina sol (A) is 3 to 11% by mass.

(2) An alumina composite sol composition comprising (A) an alumina sol containing an alumina hydrate, (B) an alkoxysilane compound, (C) a polyvalent organic acid, and (D) a solvent, wherein the amount of the alumina hydrate in the alumina composite sol composition is 1.6 to 6.8% by mass.

(3) The alumina composite sol composition according to item (1) or (2) above, wherein the polyvalent organic acid (C) is at least one member selected from itaconic acid, citric acid, glutaric acid, succinic acid, citraconic acid, maleic acid, malonic acid, and malic acid.

(4) The alumina composite sol composition according to any one of items (1) to (3) above, wherein the (A) alumina sol containing an alumina hydrate is an alumina sol obtained by hydrolysis of an aluminum alkoxide.

(5) The alumina composite sol composition according to any one of items (1) to (4) above, wherein the alumina hydrate comprises alumina hydrate particles in a flake form defined by having a short diameter of 5 to 15 nm and a long diameter of 10 to 50 nm.

(6) The alumina composite sol composition according to any one of items (1) to (5) above, wherein the alumina hydrate has at least one crystal form selected from the group consisting of amorphous, boehmite, and pseudoboehmite.

(7) The alumina composite sol composition according to any one of items (1) to (6) above, wherein the alkoxysilane compound (B) is represented by the following general formula (1):

R¹ₙ(R³)ₘSi(OR²)₄₋ₘ₋ₙ (1)

wherein R¹ represents an epoxy-containing group or (a)an (meth)acryl group, R² and R³ represent an alkyl group having 1 to 4 carbon atoms, n is in the range of from 0 to 2, and m is in the range of from 0 to 3,
wherein n + m is in the range of from 0 to 3.

(8) The alumina composite sol composition according to any one of items (1) to (7) above, wherein the solvent (D) is water, an alcohol, or a combination of water and an alcohol.

(9) The alumina composite sol composition according to any one of items (1) to (8) above, wherein the amount of the alkoxysilane compound (B) is 105 to 460 parts by mass, relative to 100 parts by mass of the alumina hydrate.

(10) The alumina composite sol composition according to any one of items (1) to (9) above, wherein the amount of the polyvalent organic acid (C) is 1 to 20 parts by mass, relative to 100 parts by mass of solids contained in the alumina composite sol composition.

(11) The alumina composite sol composition according to any one of items (1) to (10) above, which is a coating composition.

(12) The alumina composite sol composition according to any one of items (1) to (11) above, which is an insulating coating agent or a hard coating agent.

The second embodiment of the present invention is the following method for producing an alumina composite sol composition.

(13) A method for producing an alumina composite sol composition, comprising mixing together (A) an alumina sol containing an alumina hydrate, (B) an alkoxysilane compound, (C) a polyvalent organic acid, and (D) a solvent, wherein the amount of the alumina hydrate in the alumina sol (A) is 3 to 11% by mass.

(14) A method for producing an alumina composite sol composition, comprising mixing together (A) an alumina sol containing an alumina hydrate, (B) an alkoxysilane compound, (C) a polyvalent organic acid, and (D) a solvent, wherein the amount of the alumina hydrate in the alumina composite sol composition is 1.6 to 6.8% by mass.

(15) The method for producing an alumina composite sol composition according to item (13) or (14) above, wherein the polyvalent organic acid (C) is at least one member selected from itaconic acid, citric acid, glutaric acid, succinic acid, citraconic acid, maleic acid, malonic acid, and malic acid.

(16) The method for producing an alumina composite sol composition according to any one of items (13) to (15) above, wherein the alumina sol (A) containing an alumina hydrate is an alumina sol obtained by hydrolysis of an aluminum alkoxide.

(17) The method for producing an alumina composite sol composition according to any one of items (13) to (16) above, wherein the alumina hydrate comprises alumina hydrate particles in a flake form defined by having a short diameter of 5 to 15 nm and a long diameter of 10 to 50 nm.

(18) The method for producing an alumina composite sol composition according to any one of items (13) to (17) above, wherein the alumina hydrate has at least one crystal form selected from the group consisting of amorphous, boehmite, and pseudoboehmite.

(19) The method for producing an alumina composite sol composition according to any one of items (13) to (18) above, wherein the alkoxysilane compound (B) is represented by the following general formula (1):

R¹ₙ(R³)ₘSi(OR²)₄₋ₘ₋ₙ (1)

wherein R¹ represents an epoxy-containing group or (a)an (meth)acryl group, R² and R³ represent an alkyl group having 1 to 4 carbon atoms, n is in the range of from 0 to 2, and m is in the range of from 0 to 3,
wherein n + m is in the range of from 0 to 3.

(20) The method for producing an alumina composite sol composition according to any one of items (13) to (19) above, wherein the solvent (D) is water, an alcohol, or a combination of water and an alcohol.

(21) The method for producing an alumina composite sol composition according to any one of items (13) to (20) above, wherein the amount of the alkoxysilane compound (B) is 105 to 460 parts by mass, relative to 100 parts by mass of the alumina hydrate.

(22) The method for producing an alumina composite sol composition according to any one of items (13) to (21) above, wherein the amount of the polyvalent organic acid (C) is 1 to 20 parts by mass, relative to 100 parts by mass of the total of the amount of the alumina hydrate in the alumina sol (A) and the amount of the alkoxysilane compound (B).

The third embodiment of the present invention is a method for producing an alumina composite thin film, comprising applying the alumina composite sol composition according to any one of items (1) to (12) above to the surface of a substrate and curing the composition applied.

The fourth embodiment of the present invention is an alumina sol comprising alumina hydrate particles in a flake form defined by having a short diameter of 5 to 15 nm and a long diameter of 10 to 50 nm.

The fifth embodiment of the present invention is a method for producing the alumina sol of the fourth embodiment of the present invention, the method comprising the steps of: (1) stirring an aluminum alkoxide in water in the absence of an acid at a temperature of 70 to 100°C; and
(2) adding an acid to the reaction mixture obtained in the step (1) and stirring the mixture.

### Effects of the Invention

According to the first embodiment of the present invention, an alumina composite sol composition can be obtained wherein the alumina composite sol composition is advantageous in that an alumina composite thin film having high insulating properties and high hardness as well as excellent adhesion to a substrate and being capable of being applied to various substrates can be produced from the composition by a heat treatment at a relatively low temperature using a sol-gel process. Further, according to the second embodiment of the present invention, an alumina composite sol composition can be produced wherein the alumina composite sol composition is advantageous in that an alumina composite thin film having high insulating properties and high hardness as well as excellent adhesion to a substrate and being capable of being applied to various substrates can be produced from the composition by a heat treatment at a relatively low temperature using a sol-gel process.

According to the third embodiment of the present invention, an alumina composite thin film having high insulating properties and high hardness as well as excellent adhesion to a substrate and being capable of being applied to various substrates can be produced by a heat treatment at a relatively low temperature using a sol-gel process.

According to the fourth embodiment of the present invention, an alumina sol can be obtained wherein the alumina sol is suitable for producing an alumina composite sol composition which is advantageous in that an alumina composite thin film having high insulating properties and high hardness as well as excellent adhesion to a substrate and being capable of being applied to various substrates can be produced from the composition by a heat treatment at a relatively low temperature using a sol-gel process. Further, according to the fifth embodiment of the present invention, an alumina sol can be produced wherein the alumina sol is suitable for producing an alumina composite sol composition which is advantageous in that an alumina composite thin film having high insulating properties and high hardness as well as excellent adhesion to a substrate and being capable of being applied to various substrates can be produced from the composition by a heat treatment at a relatively low temperature using a sol-gel process.

### BRIEF DESCRIPTION OF THE DRAWINGS

[Fig. 1] Fig. 1 is a photograph of an alumina composite thin film formed on an aluminum substrate.
[Fig. 2] Fig. 2 is a transmission electron microscope (TEM) photomicrograph of an alumina sol.

### MODE FOR CARRYING OUT THE INVENTION

### [Alumina composite sol composition and method for producing the same]

The alumina composite sol composition, which is the first embodiment of the present invention, comprises (A) an alumina sol containing an alumina hydrate, (B) an alkoxysilane compound, (C) a polyvalent organic acid, and (D) a solvent. The amount of the alumina hydrate in the alumina sol (A) is 3 to 11% by mass. Alternatively, the amount of the alumina hydrate in the alumina composite sol composition is 1.6 to 6.8% by mass.

According to the present embodiment, an alumina composite sol composition can be obtained wherein the alumina composite sol composition is advantageous in that an alumina composite thin film having high insulating properties and high hardness as well as excellent adhesion to a substrate and being capable of being applied to various substrates can be produced from the composition by a heat treatment at a relatively low temperature using a sol-gel process.

### (A) Alumina sol

The alumina composite sol composition comprises (A) an alumina sol containing an alumina hydrate. The alumina sol means a colloid solution having alumina hydrate fine particles dispersed in a dispersing medium, such as water or an alcohol. When the dispersing medium is water, the composition of the colloid is formally represented by Al₂O₃·nH₂O. There are various types of methods for producing an alumina sol, and the form and crystalline properties of fine particles of the alumina hydrate vary depending on the method for or the conditions for producing the alumina sol. The term "alumina" has the same meaning as that of "aluminum oxide" which is represented by the compositional formula: Al₂O₃.

In the present embodiment, the amount of the alumina hydrate in the alumina sol (A) is 3 to 11% by mass, preferably 3 to 9% by mass, more preferably 3 to 5% by mass. When the amount of the alumina hydrate in the alumina sol is 3% by mass or more, the viscosity of the alumina composite sol composition can be increased to such an appropriate extent that the application properties of the alumina composite sol composition are improved, and further the insulating properties can be improved. When the amount of the alumina hydrate in the alumina sol is 11% by mass or less, the viscosity of the alumina composite sol composition can be prevented from being excessively increased, so that the application properties of the coating composition are improved, and further the dielectric breakdown strength can be improved. The amount of the alumina hydrate in the alumina sol corresponds to the amount of the alumina hydrate charged when producing the composition.

Alternatively, in the present embodiment, the amount of the alumina hydrate in the alumina composite sol composition is 1.6 to 6.8% by mass, preferably 1.6 to 5.5% by mass, more preferably 1.8 to 4.5% by mass. When the amount of the alumina hydrate in the alumina composite sol composition is 1.6% by mass or more, the viscosity of the alumina composite sol composition can be increased to such an appropriate extent that the application properties of the alumina composite sol composition are improved, and further the insulating properties can be improved. When the amount of the alumina hydrate in the alumina composite sol composition is 6.8% by mass or less, the viscosity of the alumina composite sol composition can be prevented from being excessively increased, so that the application properties of the coating composition are improved, and further the dielectric breakdown strength can be improved. The amount of the alumina hydrate in the alumina composite sol composition corresponds to the amount of the alumina hydrate charged when producing the composition.

An alumina sol is produced by a wet process, such as a sol-gel process, and there are various methods for producing the alumina sol. The sol-gel process is a method in which a metal organic compound, such as a metal alkoxide, a metal acetylacetonate, or a metal carboxylate, or a metal inorganic compound, such as a nitrate, a chloride, or a sulfate, is subjected to hydrolysis and dehydration polycondensation in a solution to obtain a sol having dispersed therein a metal oxide or a metal hydroxide, and the sol is subjected to further reaction to cause gelation (solidification), forming an oxide solid. As examples of such methods, there can be mentioned various methods, such as a method in which an aluminum alkoxide is subjected to hydrolysis (e.g., B. E. Yoldas, Amer. Ceram. Soc. Bull. 54, 289 (1975)), a method in which an alumina gel obtained by neutralizing a water-soluble basic aluminum salt with an alkali is subjected to hydrothermal treatment in the presence of an organic acid (Japanese Unexamined Patent Publication Nos. Sho 53-112299 and Sho 54-116398), a method in which an alumina gel obtained by a liquid phase neutralization reaction of an acidic aluminum compound and an alkaline substance is subjected to hydrothermal treatment in the presence of a monovalent inorganic acid (Japanese Unexamined Patent Publication No. Sho 55-27824), and a method in which an aqueous solution of alkali metal aluminate and an aqueous solution of organic hydroxyl acid are subjected to neutralization reaction (Japanese Unexamined Patent Publication No. Sho 59-223223). In the present embodiment, from the viewpoint of obtaining amorphous, boehmite, or pseudoboehmite alumina, the alumina sol is preferably an alumina sol obtained by hydrolysis of an aluminum alkoxide.

With respect to the alumina hydrate particles contained in the alumina sol, there are particles in various forms, such as a plate form, a cylinder or prism form, a needle-like form, a particulate form, and a fibrous form, and physical properties of the alumina sol vary depending on the form of the alumina hydrate particles contained, and the use of the alumina sol is changed according to the physical properties. In the present embodiment, from the viewpoint of producing a dense thin film having high insulating properties and high hardness, the alumina hydrate in the alumina sol (A) is preferably alumina hydrate particles in a flake form defined by having a short diameter of 5 to 15 nm and a long diameter of 10 to 50 nm. The alumina sol comprising alumina hydrate particles in a flake form defined by having a short diameter of 5 to 15 nm and a long diameter of 10 to 50 nm corresponds to the fourth embodiment of the present invention. In the present specification, the particle diameter of the alumina hydrate particles is a value obtained using a transmission electron microscope (TEM).

With respect to the alumina, a number of crystal forms are known, and examples of the crystal forms include amorphous, boehmite, pseudoboehmite, γ-alumina, θ-alumina, and α-alumina. In the present embodiment, from the viewpoint of the insulating properties of the alumina composite thin film, the alumina hydrate in the alumina sol (A) preferably has at least one crystal form selected from the group consisting of amorphous, boehmite, and pseudoboehmite. The crystal form of the alumina hydrate in the alumina sol can be controlled by appropriately selecting, for example, the type of the below-mentioned aluminum alkoxide, the conditions for hydrolysis of the aluminum alkoxide, or the deflocculation conditions. The crystal form of the alumina hydrate in the alumina sol can be measured using an X-ray diffractometer (for example, trade name "Ultima IV", manufactured by Rigaku Corporation) under the conditions shown below. In the present embodiment, the crystal form of the alumina hydrate is preferably amorphous or lowly crystalline boehmite or pseudoboehmite, and, in such a case, X-ray diffraction of the alumina hydrate has a broad spectrum.
<Conditions> tube bulb: Cu; tube voltage: 40 kV; tube current: 40 mA; sampling width: 0.020°; scanning speed: 20°/min; dispersion slit: 2/3°; dispersion vertical restriction slit: 10 mm; scattering slit: 13 mm; receptor slit: 13 mm

The alumina sol comprising alumina hydrate particles in a flake form defined by having a short diameter of 5 to 15 nm and a long diameter of 10 to 50 nm can be produced by, for example, a method which comprises the steps of: (1) stirring an aluminum alkoxide in water in the absence of an acid at a temperature of 70 to 100°C; and
(2) adding an acid to the reaction mixture obtained in the step (1) and stirring the mixture.
The method for producing the alumina sol corresponds to the fifth embodiment of the present invention.

In the step (1), an aluminum alkoxide in water is stirred in the absence of an acid at a temperature of 70 to 100°C. By stirring at a temperature of 70 to 100°C, the aluminum alkoxide in water undergoes a hydrolysis reaction and a polycondensation reaction, forming a sol having an alumina hydrate dispersed in a solution. The stirring can be performed in any of an air atmosphere and an atmosphere of inert gas, such as nitrogen or argon, and is preferably conducted in an atmosphere of inert gas, such as nitrogen or argon. The stirring in the step (1) is performed at a temperature of 70 to 100°C, preferably at a temperature of 80 to 90°C. The time for stirring in the step (1) can vary depending on conditions, such as the temperature for stirring, and is, for example, 1 minute to 1 hour.

Specific examples of aluminum alkoxides include aluminum ethoxide, aluminum n-butoxide, aluminum sec-butoxide, aluminum tert-butoxide, and aluminum isopropoxide.

In the present specification, the aluminum alkoxide includes an aluminum chelate. Specific examples of aluminum chelates include a cyclic aluminum oligomer, diisopropoxy(ethylacetoacetato)aluminum, and tris(ethylacetoacetato)aluminum.

Of these compounds, preferred are those having an alkoxy group having 2 to 5 carbon atoms because, for example, they have appropriate hydrolyzability and a by-product is easily removed from them.

In the step (1), the aluminum alkoxide solids content in water is preferably 9 to 18% by mass, more preferably 9 to 12% by mass. When the solids content is 9% by mass or more, the resultant alumina hydrate particles can have an appropriate uniform size. On the other hand, when the solids content is 18% by mass or less, excellent stirring properties of the reaction mixture can be maintained.

Then, an acid is added to the reaction mixture obtained in the step (1) above and the resultant mixture is stirred (step (2)). In the step (2), the flocculated solid is redispersed in the solution due to an effect of the acid to form a colloid (deflocculation). Thus, a sol having the alumina hydrate dispersed in the solution can be formed. In the step (2), a hydrolysis reaction or polycondensation reaction of the unreacted aluminum alkoxide can simultaneously occur.

The process of formation of the sol is a competitive reaction between the hydrolysis reaction of an alkoxide group and the polycondensation reaction due to an Al-OH group. Therefore, the ratio of the reaction rate of the polycondensation reaction to that of the hydrolysis reaction is an important factor. In a conventional method for producing an alumina sol by subjecting an aluminum alkoxide to hydrolysis, for conducting the hydrolysis, the aluminum alkoxide in water is stirred in the presence of an acid from the beginning. In the present embodiment, the step (1) is performed in the absence of an acid, and an acid is added in the step (2), and thus the ratio of the reaction rate of the polycondensation reaction to that of the hydrolysis reaction is controlled, so that the structure of the sol is controlled.

The acid used in the step (2) is preferably a monovalent acid, and examples include inorganic acids, such as nitric acid and hydrochloric acid, and organic acids, such as formic acid, acetic acid, propionic acid, and butyric acid. From the viewpoint of reducing an adverse effect on the performance of the obtained film, or in view of the handling properties, an organic acid is preferred. The organic acid is preferably acetic acid in view of the operating properties and from an economical point of view. The amount of the acid used is preferably 0.05 to 0.2 mol, more preferably 0.1 to 0.16 mol, relative to 1 mol of the aluminum alkoxide.

The stirring in the step (2) is performed, for example, at a temperature of 70 to 100°C, preferably at a temperature of 80 to 90°C. The time for stirring in the step (2) can vary depending on the conditions for stirring, and stirring is performed for, for example, 50 to 150 hours, preferably 70 to 120 hours.

In the step (1) and the step (2), the hydrolysis reaction of the aluminum alkoxide forms an alcohol as a by-product, and the alcohol may be distilled off from the reaction system, or may not particularly be distilled off.

After the step (2), if necessary, the reaction solution is cooled to room temperature, and the supernatant of the reaction solution is taken by, for example, centrifugal separation, obtaining an alumina sol.

### (B) Alkoxysilane compound

The alumina composite sol composition comprises (B) an alkoxysilane compound. In the present specification, the alkoxysilane compound (B) means a compound having at least one alkoxy group on silicon. In the present embodiment, the alkoxysilane compound (B) is preferably a compound represented by the following general formula (1):

R¹ₙ(R³)ₘSi(OR²)₄₋ₘ₋ₙ (1)

wherein R¹ represents an epoxy-containing group or (a)an (meth)acryl group, R² and R³ represent an alkyl group having 1 to 4 carbon atoms, n is in the range of from 0 to 2, and m is in the range of from 0 to 3,
wherein n + m is in the range of from 0 to 3.

In the finally obtained sol composition, the specific structure of the sol composition is not clearly found, but it is considered that, by virtue of the alkoxysilane compound (B) contained, the alumina hydrate in the alumina sol (A) is bonded to a silanol group formed by hydrolysis of part of the alkoxysilane compound (B) to form an alumina hydrate-alkoxysilane compound composite (referred to also as "alumina composite" in the present specification), forming a sol having the composite dispersed in the solution. That is, the alumina composite sol composition is a colloid solution having alumina composite fine particles dispersed in a dispersing medium. Part of the alkoxysilane compound (B) is not hydrolyzed but remains intact in the solution, and further the alumina hydrate particles in the alumina sol (A), which are not bonded to a silanol group, are also present in the solution. Therefore, the alumina composite sol composition contains the alumina composite, alumina hydrate, and alkoxysilane compound as solids.

The amount of the alkoxysilane compound (B) mixed is preferably 105 to 460 parts by mass, more preferably 150 to 450 parts by mass, further preferably 250 to 400 parts by mass, relative to 100 parts by mass of the alumina hydrate in the alumina sol (A). The amount of the alkoxysilane compound (B) corresponds to the amount of the alkoxysilane compound charged when mixing with the alumina sol (A).

Specific examples of alkoxysilane compounds include so-called silane coupling agents, such as 3-glycidoxypropyltrimethoxysilane, 3-glycidoxypropyltriethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, 3-methacryloxypropyltrimethoxysilane, 3-methacryloxypropyltriethoxysilane, 3-methacryloxypropylmethyldimethoxysilane, 3-glycidoxypropylmethyldimethoxysilane, and 3-acryloxypropyltrimethoxysilane, and tetraethoxysilane (TEOS). Further specific examples of alkoxysilane compounds include silane coupling agents, such as vinyltrimethoxysilane, vinyltriethoxysilane, p-styryltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, N-(vinylbenzyl)-2-aminoethyl-3-aminopropyltrimethoxysilane, tris-(trimethoxysilylpropyl) isocyanurate, 3-ureidopropyltrialkoxysilane, 3-mercaptopropylmethyldimethoxysilane, 3-mercaptopropyltrimethoxysilane, 3-isocyanatopropyltriethoxysilane, and 3-trimethoxysilylpropylsuccinic anhydride. The alkoxysilane compound is appropriately selected according to the type of the substrate to be coated. These compounds can be used individually or in combination.

### (C) Polyvalent organic acid

The alumina composite sol composition comprises (C) a polyvalent organic acid. In the present specification, the "polyvalent organic acid" means a compound having two or more carboxyl groups or sulfo groups per molecule, preferably a compound having two or more carboxyl groups per molecule, more preferably a compound having two carboxyl groups per molecule. The polyvalent organic acid (C) contained crosslinks the inside of and/or between the particles in the alumina composite sol, stabilizing the alumina composite sol particles. Further, in the alumina composite thin film obtained from the sol composition, by virtue of the polyvalent organic acid (C) contained, a composite in which the alumina hydrate, alkoxysilane compound, and the polyvalent organic acid are crosslinked is formed, so that an alumina composite thin film having a dense structure and having high insulating properties and high hardness can be formed.

Examples of polyvalent organic acids include oxalic acid, itaconic acid, citric acid, glutaric acid, succinic acid, citraconic acid, maleic acid, malonic acid, malic acid, adipic acid, pimelic acid, suberic acid, azelaic acid, sebacic acid, phthalic acid, isophthalic acid, terephthalic acid, trimesic acid, aconitic acid, and oxalacetic acid, and preferred are itaconic acid, citric acid, glutaric acid, succinic acid, citraconic acid, maleic acid, malonic acid, and malic acid. These acids can be used individually or in combination.

The polyvalent organic acid may be in the form of a salt. Examples of salts of the polyvalent organic acid include an alkali metal salt, an alkaline earth metal salt, an ammonium salt, and an amine salt. Of these, from the viewpoint of improving the solubility of the polyvalent organic acid in water, preferred is an alkali metal salt or an ammonium salt, and more preferred is a sodium salt, a potassium salt, or an ammonium salt.

The amount of the polyvalent organic acid (C) is preferably 1 to 20 parts by mass, more preferably 2 to 15 parts by mass, relative to 100 parts by mass of the total of the amount of the alumina hydrate in the alumina sol (A) and the amount of the alkoxysilane compound (B). Alternatively, the amount of the polyvalent organic acid (C) is preferably 1 to 20 parts by mass, more preferably 2 to 15 parts by mass, relative to 100 parts by mass of the solids contained in the alumina composite sol composition. The amount of the polyvalent organic acid (C) corresponds to the amount of the polyvalent organic acid charged when producing the composition.

### (D) Solvent

The alumina composite sol composition comprises (D) a solvent. With respect to the solvent, water, an alcohol, such as methanol, ethanol, or propanol, or a combination of water and an alcohol can be used, and preferred is water, ethanol, or a combination of water and ethanol.

In the alumina composite sol composition, an additive, such as a curing agent, a viscosity modifier, a pH adjustor, or a coloring component, may be incorporated into the composition in such an amount that the performance of the composition is not adversely affected.

In an embodiment, the alumina composite sol composition preferably has a solids content in the range of from 6.5 to 15% by mass. When the solids content of the alumina composite sol composition is 6.5% by mass or more, a film obtained from the composition has a satisfactory thickness per one application of the composition. On the other hand, when the solids content of the alumina composite sol composition is 15% by mass or less, excellent operating properties when forming a film and the stability of the coating liquid can be obtained. The solids of the alumina composite sol composition include the alumina composite, alumina hydrate, and alkoxysilane compound present in the alumina composite sol composition.

It is preferred that the amount of the solvent (D) is controlled so that the amount of the alumina hydrate in the alumina composite sol composition becomes 1.6 to 6.8% by mass. Further, it is preferred that the amount of the solvent (D) is controlled so that the solids content of the alumina composite sol composition becomes in the range of from 6.5 to 15% by mass.

In an embodiment, the alumina composite sol composition preferably has a viscosity of 14 to 22 mPa s. When the viscosity of the alumina composite sol composition is in the above-mentioned range, a film obtained from the composition has a satisfactory thickness per one application of the composition, and excellent operating properties when forming a film and the stability of the coating liquid can be obtained.

The alumina composite sol composition can be produced by mixing together (A) an alumina sol containing an alumina hydrate, (B) an alkoxysilane compound, (C) a polyvalent organic acid, and (D) a solvent. The amount of the alumina hydrate in the alumina sol (A) is 3 to 11% by mass. Alternatively, the amount of the alumina hydrate in the alumina composite sol composition is 1.6 to 6.8% by mass. The method for producing the alumina composite sol composition corresponds to the second embodiment of the present invention. The method for mixing the components may be a method in which all the components are mixed at the same time, or may be a method in which, for example, the alumina sol (A) and the solvent (D) are mixed to obtain a first mixture, and separately, the alkoxysilane compound (B), the polyvalent organic acid (C), and the solvent (D) are mixed to obtain a second mixture, and the first mixture and the second mixture are mixed with each other.

Mixing these components can be conducted, for example, at a temperature of 10 to 100°C, preferably at room temperature. The time for mixing these components can vary depending on the temperature for mixing, and is, for example, 1 to 200 hours, preferably 50 to 120 hours.

The alumina composite sol composition can be used as a coating composition. Particularly, an alumina composite thin film having high insulating properties and high hardness as well as excellent adhesion to a substrate and being capable of being applied to various substrates can be produced from the composition by a sol-gel process at a relatively low temperature, and therefore the alumina composite sol composition can be used as an insulating coating agent or a hard coating agent. When used as an insulating coating agent, the alumina composite sol composition can be applied to, for example, a metal substrate, such as iron, copper, aluminum, titanium, steel, stainless steel (SUS), or brass; a ceramic substrate, such as Al₂O₃, SiO₂, ZrO, TiO₂, glass, tile, or earthen ware; an organic substrate, such as carbon, graphite, paper, wood chip, or a plastic, e.g., polyvinyl alcohol, polypropylene, polycarbonate, polyimide, polyethylene terephthalate, an acrylic resin, or polyurethane; or a substrate of a magnetic material. When used as a hard coating agent, the alumina composite sol composition can be applied to, for example, a metal substrate, such as iron, copper, aluminum, titanium, steel, stainless steel (SUS), or brass; a ceramic substrate, such as Al₂O₃, SiO₂, ZrO, TiO₂, glass, tile, or earthen ware; an organic substrate, such as carbon, graphite, paper, wood chip, or a plastic, e.g., polyvinyl alcohol, polypropylene, polycarbonate, polyimide, polyethylene terephthalate, an acrylic resin, or polyurethane; or a substrate of a magnetic material. More specifically, the alumina composite sol composition can be used as an insulating coat or hard coat for the inner surface of an apparatus (e.g., aluminum or SUS), an insulating coat or hard coat for a wound coil (such as Cu), an insulating coat or hard coat for a flexible substrate (e.g., polyimide or polyethylene terephthalate), an insulating coat or hard coat for a magnetic material, an insulating coat for a metal powder or carbon powder, an insulating coat or hard coat for electronic parts, or an insulating coat or hard coat for a ceramic, such as glass or silica.

Further, the alumina composite sol composition can be used as a sealer. For example, the composition can be used for sealing a sprayed film (metal or ceramic) or a porous material.

### [Method for producing an alumina composite thin film]

The method for producing an alumina composite thin film in the present embodiment comprises applying the alumina composite sol composition of the first embodiment to the surface of a substrate and curing the composition applied.

With respect to the type and form of the substrate to which the alumina composite sol composition is applied, there is no particular limitation, and examples of substrates include metal substrates, such as iron, copper, aluminum, titanium, steel, stainless steel (SUS), and brass; ceramic substrates, such as Al₂O₃, SiO₂, ZrO, TiO₂, glass, tile, and earthen ware; organic substrates, such as carbon, graphite, paper, wood chip, and plastics, e.g., polyvinyl alcohol, polypropylene, polycarbonate, polyimide, polyethylene terephthalate, an acrylic resin, and polyurethane; and a substrate of a magnetic material.

With respect to the method for applying the alumina composite sol composition, examples include a dipping method, a spinning method, a spraying method, a jet dispensing method, screen printing, a laminar flow method, and an electrophoresis method, and the method can be appropriately selected according to the type of the substrate.

The alumina composite sol composition is applied to the surface of a substrate, and then cured by a heat treatment to form an alumina composite thin film. The temperature for the heat treatment is, for example, 80 to 230°C, preferably 110 to 200°C. The time for the heat treatment can vary depending on the temperature for the heat treatment, and is, for example, 5 to 60 minutes. The alumina composite sol composition of the first embodiment need not be subjected to heat treatment at a temperature of 500°C or higher, which is needed for sintering a metal oxide, and therefore can be applied to various types of substrates. Further, the alumina composite sol composition of the first embodiment is advantageous in that an alumina composite thin film having a dense structure and having high insulating properties and high hardness can be formed from the composition even by a heat treatment at a relatively low temperature.

With respect to the alumina composite thin film, the specific structure of the film is not clearly found, but it is considered that a composite in which the alumina hydrate, alkoxysilane compound, and polyvalent organic acid are crosslinked is formed, so that the film has a dense and strong structure. Accordingly, the alumina composite thin film exhibits high insulating properties and high hardness.

The thickness of the alumina composite thin film can be appropriately selected according to the use of the film, and is, for example, 0.01 to 30 µm, preferably 0.1 to 10 µm, further preferably 1 to 5 µm. When the thickness of the alumina composite thin film is in the above range, desired insulating properties and hardness of the film can be obtained, and further generation of cracks in the film being subjected to heat treatment can be avoided.

### Examples

Hereinbelow, the present invention will be described in more detail with reference to the following Examples and Comparative Examples, which should not be construed as limiting the scope of the present invention.

### [Preparation of an alumina sol]

### Preparation Example 1 Preparation of Alumina Sol A

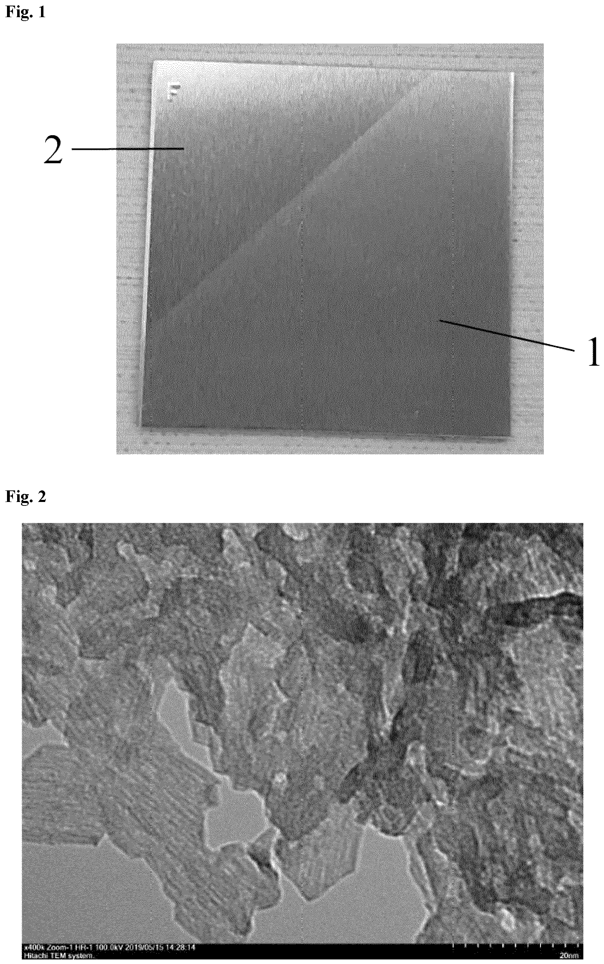

43,880 g of pure water and 4,570 g of aluminum isopropoxide were placed in a 50 1 reaction vessel, and the temperature of the resultant mixture was increased to 85°C while stirring, and the mixture was stirred for 10 minutes. To the resultant reaction mixture was added 1,550 g of an aqueous acetic acid solution (acetic acid: 210 g), followed by reaction at 85°C for 72 to 120 hours. The reaction mixture was cooled to room temperature, terminating the reaction. The reaction mixture was subjected to centrifugal separation while checking the particle diameter by a laser diffraction/scattering type particle size distribution measurement apparatus (LA-960, manufactured by Horiba, Ltd.), and the supernatant was taken to obtain an alumina sol named Alumina Sol A. The obtained Alumina Sol A was observed by means of a transmission electron microscope (TEM) (HT7700, manufactured by Hitachi High-Technologies Corporation (100 kV)), and, as a result, as seen in Fig. 2, it was found that Alumina Sol A was a sol having dispersed therein alumina hydrate particles in a flake form defined by having a short diameter of 5 to 15 nm and a long diameter of 10 to 50 nm. The alumina hydrate concentration of the alumina sol was 3% by mass.

### Preparation Example 2 Preparation of Alumina Sol B

Substantially the same procedure as in Preparation Example 1 was repeated, except that the amount of pure water was changed to 43,380 g, and that the amount of aluminum isopropoxide was changed to 5,070 g, obtaining an alumina sol named Alumina Sol B having dispersed therein alumina hydrate particles in a flake form defined by having a short diameter of 5 to 15 nm and a long diameter of 10 to 50 nm. The alumina hydrate concentration of the alumina sol was 4% by mass.

### Preparation Example 3 Preparation of Alumina Sol C

Substantially the same procedure as in Preparation Example 1 was repeated, except that the amount of pure water was changed to 39,880 g, and that the amount of aluminum isopropoxide was changed to 8,570 g, obtaining an alumina sol named Alumina Sol C having dispersed therein alumina hydrate particles in a flake form defined by having a short diameter of 5 to 15 nm and a long diameter of 10 to 50 nm. The alumina hydrate concentration of the alumina sol was 11% by mass.

### Preparation Example 4 Preparation of Alumina Sol D

Substantially the same procedure as in Preparation Example 1 was repeated, except that the amount of pure water was changed to 44,130 g, and that the amount of aluminum isopropoxide was changed to 4,320 g, obtaining an alumina sol named Alumina Sol D having dispersed therein alumina hydrate particles in a flake form defined by having a short diameter of 5 to 15 nm and a long diameter of 10 to 50 nm. The alumina hydrate concentration of the alumina sol was 2.5% by mass.

### Preparation Example 5 Preparation of Alumina Sol E

Substantially the same procedure as in Preparation Example 1 was repeated, except that the amount of pure water was changed to 39,630 g, and that the amount of aluminum isopropoxide was changed to 8,820 g, obtaining an alumina sol named Alumina Sol E having dispersed therein alumina hydrate particles in a flake form defined by having a short diameter of 5 to 15 nm and a long diameter of 10 to 50 nm. The alumina hydrate concentration of the alumina sol was 11.5% by mass.

### [Preparation of an alumina composite sol composition]

### (Examples 1 to 14 and Comparative Examples 1 to 3)

The raw materials and the amounts of the materials charged (parts by mass) shown in Table 1 were used. An alumina sol and pure water were placed in a 501 reaction vessel, and stirred at room temperature for 60 minutes to obtain a reaction solution named Reaction Solution A. On the other hand, an alkoxysilane compound, and an organic acid solution containing a polyvalent organic acid and water were mixed, and stirred at room temperature for one hour to obtain a reaction solution named Reaction Solution B. Reaction Solution B was added to Reaction Solution A, and the resultant mixture was stirred at room temperature for 96 hours, obtaining the alumina composite sol compositions in Examples 1 to 14 and Comparative Examples 1 and 2. In Comparative Example 3, substantially the same procedure as in Example 1 was repeated, except that the polyvalent organic acid was not contained, obtaining the alumina composite sol composition in Comparative Example 3.

Alkoxysilane compounds (B) used, which are shown in the tables below, are as follows.

### (B) Alkoxysilane Compound A: 3-Glycidoxypropyltrimethoxysilane

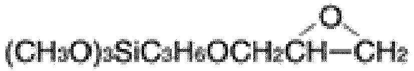

### (B) Alkoxysilane Compound B: 3-Glycidoxypropyltriethoxysilane

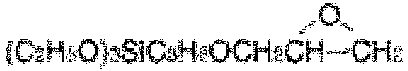

### [Measurement of a viscosity]

With respect to the alumina composite sol compositions in the Examples and Comparative Examples, a viscosity was measured using Brookfield type viscometer DV2TCP (cone: CPA-52Z; number of revolutions: 200 rpm).

### [Formation of an alumina composite thin film]

The alumina composite sol compositions in the Examples and Comparative Examples were individually applied onto an aluminum substrate (substrate) by a dipping method, and subjected to heating treatment at 150°C for one hour, obtaining an alumina composite thin film on the aluminum substrate. The alumina composite thin film was, as seen in Fig. 1, a thin film having transparency. A thickness of the alumina composite thin film was measured using electromagnetic eddy-current type small-size thickness meter DUALSCOPE FMP40 (manufactured by Fischer Instruments K.K.). The results are shown in Table 1.

### [Dielectric breakdown strength]

The alumina composite sol compositions in the Examples and Comparative Examples were individually applied onto an aluminum substrate (substrate) by a dipping method, and subjected to heating treatment at 150°C for one hour, obtaining an alumina composite thin film on the aluminum substrate. Using the alumina composite thin film on the aluminum substrate, a dielectric breakdown voltage was measured using dielectric strength tester DAC-6041 (manufactured by Soken Electric Co., Ltd.), and a dielectric breakdown strength was determined. The results are shown in Table 1. When the dielectric breakdown strength is 200 V/um or more, the film has high dielectric breakdown strength and is considered excellent.

### [Adhesion 1]

The alumina composite sol compositions in the Examples and Comparative Examples were individually applied onto an aluminum substrate (substrate) by a dipping method, and subjected to heating treatment at 150°C for one hour, obtaining an alumina composite thin film on the aluminum substrate. With respect to the alumina composite thin film on the aluminum substrate, the adhesion was evaluated by the method described in JIS K 5600-5-6. The results are shown in Table 1. When the adhesion is rated 1 or less, the film has high adhesion and is considered excellent.

### [Hardness (Pencil hardness)]

The alumina composite sol compositions in the Examples and Comparative Examples were individually applied onto an aluminum substrate (substrate) by a dipping method, and subjected to heating treatment at 150°C for one hour, obtaining an alumina composite thin film on the aluminum substrate. With respect to the alumina composite thin film on the aluminum substrate, hardness of the film was tested by the pencil hardness test described in JIS K 5600-5-4. The results are shown in Table 1. When the pencil hardness is 6H or higher, the film has high hardness and is considered excellent.

### [Insulation resistance]

The alumina composite sol compositions in the Examples and Comparative Examples were individually applied onto an aluminum substrate (substrate) by a dipping method, and subjected to heating treatment at 150°C for one hour, obtaining an alumina composite thin film on the aluminum substrate. An electrode was disposed on the alumina composite thin film portion, and a voltage of 100 V was applied and an insulation resistance value at that time was measured using Super Megohm Meter SM-8220 (manufactured by Hioki E.E. Corporation). The results are shown in Table 1. When the insulation resistance value is 1.0E + 11 Ω or more, the film has high insulating properties and is considered excellent.

**[Table 1-1]**

| | | Comparative Example 1 | Example 1 | Example 2 | Example 3 | Comparative Example 2 |
|---|---|---|---|---|---|---|
| (A) Alumina sol | D: Alumina hydrate 2.5 mass% | 60.5 | | | | |
| | A: Alumina hydrate 3 mass% | | 60.5 | | | |
| | B: Alumina hydrate 4 mass% | | | 60.5 | | |
| | C: Alumina hydrate 11 mass% | | | | 60.5 | |
| | E: Alumina hydrate 11.5 mass% | | | | | 60.5 |
| (B) Alkoxysilane compound | A | 7.1 | 7.1 | 7.1 | 7.1 | 7.1 |
| | B | | | | | |
| (C) Polyvalent organic acid | Itaconic acid | | | | | |
| | Succinic acid | 0.7 | 0.7 | 0.7 | 0.7 | 0.7 |
| | Maleic acid | | | | | |
| | Malonic acid | | | | | |
| | Malic acid | | | | | |
| (D) Solvent | Pure water | 32.0 | 32.0 | 32.0 | 32.0 | 32.0 |
| | Ethanol | | | | | |
| Physical properties | Alumina hydrate in composition (mass%) | 1.5 | 1.8 | 2.4 | 6.6 | 6.9 |
| | Viscosity (mPa·s) | 13.9 | 15.2 | 17.5 | 19.3 | 23.2 |
| | Dielectric breakdown strength (V/µm) | 410 | 316 | 330 | 241 | 184 |
| | Thickness (µm) | 0.7 | 1.3 | 1.5 | 1.7 | 3.3 |
| | Adhesion | 0 | 0 | 0 | 0 | 0 |
| | Hardness (Pencil hardness) | 6H | 6H | 6H | 6H | 6H |
| | Insulation resistance (100V)(Ω) | 3.5E+10 | 6.2E+11 | 5.0E+11 | 7.4E+11 | 8.3E+11 |

**[Table 1-2]**

| | | Example 4 | Example 5 | Example 6 | Example 7 | Example 8 | Example 9 | Example 10 |
|---|---|---|---|---|---|---|---|---|
| (A) Alumina sol | D: Alumina hydrate 2.5 mass% | | | | | | | |
| | A: Alumina hydrate 3 mass% | | | | | | | |
| | B: Alumina hydrate 4 mass% | 60.5 | 60.5 | 60.5 | 60.5 | 60.5 | 60.5 | 60.5 |
| | C: Alumina hydrate 11 mass% | | | | | | | |
| | E. Alumina hydrate 11.5 mass% | | | | | | | |
| (B) Alkoxysilane compound | A | 3.6 | 10.7 | | 7.1 | 7.1 | 7.1 | 7.1 |
| | B | | | 7.1 | | | | |
| (C) Polyvalent organic acid | Itaconic acid | | | | 0.4 | | | |
| | Succinic acid | 0.7 | 0.7 | 0.7 | | | | |
| | Maleic acid | | | | | 1.4 | | |
| | Malonic acid | | | | | | 0.2 | |
| | Malic acid | | | | | | | 0.4 |
| (D) Solvent | Pure water | 32.0 | 32.0 | 32.0 | 31.0 | 32.0 | 32.0 | 32.0 |
| | Ethanol | | | | 1.0 | | | |
| Physical properties | Alumina hydrate in composition (mass%) | 2.5 | 2.3 | 2.4 | 2.4 | 2.4 | 2.4 | 2.4 |
| | Viscosity (mPa·s) | 19.1 | 19.3 | 14.8 | 17.0 | 15.1 | 19.5 | 17.5 |
| | Dielectric breakdown strength (V/µm) | 252 | 220 | 400 | 323 | 475 | 331 | 210 |
| | Thickness (µm) | 1.7 | 1.2 | 1.0 | 1.3 | 1.0 | 1.4 | 3.0 |
| | Adhesion | 0 | 0 | 0 | 0 | 0 | 0 | 0 |
| | Hardness (Pencil hardness) | 6H | 6H | 6H | 6H | 6H | 6H | 6H |
| | Insulation resistance (100V(Ω) | 2.5E+11 | 1.1E+11 | 3.2E+11 | 2.5E+11 | 5.2E+11 | 4.3E+11 | 2.1E-11 |

**[Table 1-3]**

| | | Example 11 | Example 12 | Example 13 | Example 14 | Comparative Example 3 |
|---|---|---|---|---|---|---|
| (A) Alumina sol | D: Alumina hydrate 2.5 mass% | | | | | |
| | A: Alumina hydrate 3 mass% | | | | | |
| | B: Alumina hydrate 4 mass% | 60.5 | 60.5 | 60.5 | 60.5 | 60.5 |
| | C: Alumina hydrate 11 mass% | | | | | |
| | E: Alumina hydrate 11.5 mass% | | | | | |
| (B) Alkoxysilane compound | A | 7.1 | 7.1 | 7.1 | 7.1 | 7.1 |
| | B | | | | | |
| (C) Polyvalent organic acid | Itaconic acid | | | | | |
| | Succinic acid | 0.7 | 0.7 | 0.5 | 1.0 | |
| | Maleic acid | | | | | |
| | Malonic acid | | | | | |
| | Malic acid | | | | | |
| (D) Solvent | Pure water | 74.0 | 31.0 | 32.0 | 32.0 | 32.0 |
| | Ethanol | | 1.0 | | | |
| Physical properties | Alumina hydrate in composition (mass%) | 1.7 | 2.4 | 2.4 | 2.4 | 2.4 |
| | Viscosity (mPa·s) | 14.6 | 18.5 | 16.00 | 19.3 | 19.3 |
| | Dielectric breakdown strength (V/µm) | 398 | 355 | 344 | 205 | 0 |
| | Thickness (µm) | 1.0 | 1.2 | 1.2 | 3.0 | 0.4 |
| | Adhesion | 0 | 0 | 0 | 0 | |
| | Hardness (Pencil hardness) | 6H | 6H | 6H | 6H | |
| | Insulation resistance (100V)(Ω) | 3.4E+11 | 2.7E+11 | 3.1E+11 | 1.2E+11 | |

As can be seen from the results shown in Table 1, by using the alumina composite sol compositions in Examples 1 to 14, an alumina composite thin film having high insulating properties, high dielectric breakdown strength, high adhesion, and high hardness was able to be produced. On the other hand, the alumina composite thin film produced using the alumina composite sol composition in Comparative Example 1 was not able to achieve satisfactory insulating properties. The alumina composite thin film produced using the alumina composite sol composition in Comparative Example 2 was not able to achieve satisfactory dielectric breakdown strength. With respect to the alumina composite sol composition in Comparative Example 3, it was impossible to produce a thin film having a satisfactory thickness from the composition, and measurement of the insulating properties, dielectric breakdown strength, adhesion, and hardness was impossible.

### [Adhesion 2]

The alumina composite sol composition in Example 2 was applied onto each of an aluminum substrate, an alumina substrate, a glass substrate, and a polyimide substrate by a dipping method, and subjected to heating treatment at 150°C for one hour, obtaining an alumina composite thin film on each substrate. With respect to the alumina composite thin film on each substrate, the adhesion was evaluated by the method described in JIS K 5600-5-6. The results are shown in Table 2. When the adhesion is rated 1 or less, the film has high adhesion and is considered excellent. As can be seen from the results shown in Table 2, with respect to the all substrates, the adhesion was excellent.

**[Table 2]**

| | Aluminum substrate | Alumina substrate | Glass substrate | Polyimide substrate |
|---|---|---|---|---|
| Adhesion | 0 | 0 | 0 | 0 |

The disclosure of Japanese Patent Application No. 2020-203873 (filing date: December 9, 2020) is incorporated herein by reference in its entirety.

All references, patent applications, and technical standards described herein are incorporated herein by reference to the same extent as if the individual references, patent applications, and technical standards were specifically and individually noted as being incorporated by reference.

### Description of Reference Numerals

1: Coating portion
2: Non-coating portion (aluminum substrate)

## Claims

1. An alumina composite sol composition comprising (A) an alumina sol containing an alumina hydrate, (B) an alkoxysilane compound, (C) a polyvalent organic acid, and (D) a solvent, wherein the amount of the alumina hydrate in the alumina sol (A) is 3 to 11% by mass.

2. An alumina composite sol composition comprising (A) an alumina sol containing an alumina hydrate, (B) an alkoxysilane compound, (C) a polyvalent organic acid, and (D) a solvent, wherein the amount of the alumina hydrate in the alumina composite sol composition is 1.6 to 6.8% by mass.

3. The alumina composite sol composition according to claim 1 or 2, wherein the polyvalent organic acid (C) is at least one member selected from itaconic acid, citric acid, glutaric acid, succinic acid, citraconic acid, maleic acid, malonic acid, and malic acid.

4. The alumina composite sol composition according to any one of claims 1 to 3, wherein the (A) alumina sol containing an alumina hydrate is an alumina sol obtained by hydrolysis of an aluminum alkoxide.

5. The alumina composite sol composition according to any one of claims 1 to 4, wherein the alumina hydrate comprises alumina hydrate particles in a flake form defined by having a short diameter of 5 to 15 nm and a long diameter of 10 to 50 nm.

6. The alumina composite sol composition according to any one of claims 1 to 5, wherein the alumina hydrate has at least one crystal form selected from the group consisting of amorphous, boehmite, and pseudoboehmite.

7. The alumina composite sol composition according to any one of claims 1 to 6, wherein the alkoxysilane compound (B) is represented by the following general formula (1):
R¹ₙ(R³)ₘSi(OR²)₄₋ₘ₋ₙ (1)
wherein R¹ represents an epoxy-containing group or (a)an (meth)acryl group, R ² and R³ represent an alkyl group having 1 to 4 carbon atoms, n is in the range of from 0 to 2, and m is in the range of from 0 to 3,
wherein n + m is in the range of from 0 to 3.

8. The alumina composite sol composition according to any one of claims 1 to 7, wherein the solvent (D) is water, an alcohol, or a combination of water and an alcohol.

9. The alumina composite sol composition according to any one of claims 1 to 8, wherein the amount of the alkoxysilane compound (B) is 105 to 460 parts by mass, relative to 100 parts by mass of the alumina hydrate.

10. The alumina composite sol composition according to any one of claims 1 to 9, wherein the amount of the polyvalent organic acid (C) is 1 to 20 parts by mass, relative to 100 parts by mass of solids contained in the alumina composite sol composition.

11. The alumina composite sol composition according to any one of claims 1 to 10, which is a coating composition.

12. The alumina composite sol composition according to any one of claims 1 to 11, which is an insulating coating agent or a hard coating agent.

13. A method for producing an alumina composite thin film, comprising applying the alumina composite sol composition according to any one of claims 1 to 12 to the surface of a substrate and curing the composition applied.

14. A method for producing an alumina composite sol composition, comprising mixing together (A) an alumina sol containing an alumina hydrate, (B) an alkoxysilane compound, (C) a polyvalent organic acid, and (D) a solvent, wherein the amount of the alumina hydrate in the alumina sol (A) is 3 to 11% by mass.

15. An alumina sol comprising alumina hydrate particles in a flake form defined by having a short diameter of 5 to 15 nm and a long diameter of 10 to 50 nm.

16. A method for producing the alumina sol according to claim 15, comprising the steps of:
(1) stirring an aluminum alkoxide in water in the absence of an acid at a temperature of 70 to 100°C; and
(2) adding an acid to the reaction mixture obtained in the step (1) and stirring the mixture.
